**Europäisches Patentamt**

**European Patent Office**

**Office européen des brevets**

(11) Veröffentlichungsnummer: **0 001 829**
**A1**

(12) # EUROPÄISCHE PATENTANMELDUNG

(21) Anmeldenummer: **78101276.0**

(22) Anmeldetag: **02.11.78**

(51) Int. Cl.²: **F 16 B 1/04**
**//A61G5/04**

(30) Priorität: **04.11.77 CH 13472/77**

(43) Veröffentlichungstag der Anmeldung:
**16.05.79 Patentblatt 79/10**

(84) Benannte Vertragsstaaten:
**BE DE FR GB LU NL SE**

(71) Anmelder: **F. Knobel, Elektroapparatebau AG.**

**CH-8755 Ennenda(CH)**

(72) Erfinder: **Knobel, Fritz**
**Obere Allmeind**
**CH-8755 Ennenda(CH)**

(72) Erfinder: **Kuhn, Gerhard**
**Schiltstrasse 38**
**CH-8750 Glarus(CH)**

(74) Vertreter: **Blum, Rudolf E. et al,**
**c/o E. Blum & Co Patentanwälte Vorderberg 11**
**CH-8044 Zürich(CH)**

(54) Ueberholsperre für eine Antriebsvorrichtung und Verwendung der Ueberholsperre in einem Fahrzeug mit Einzelradantrieb.

(57) Ueberholsperre für eine Antriebsvorrichtung mit einem auf einer starren Achse (1,17) angeordneten Antriebs- und Abtriebselement mit starren Mitnehmerelementen bei der ein Organ (13,23) vorgesehen ist, dasdurch das Mitnehmerelement (10,18) des Antriebselementes mit der Achse (1,17) ausser Wirkverbindung bringbar ist und bei gleichlaufenden Antriebs- und Abtriebselementen frei mitläuft und durch das Mitnehmerelement (11,20) des Abtriebselementes mit der Achse (1,17) in Wirkverbindung bringbar ist und bei ungleichlaufenden Antriebs- und Abtriebselementen das Abtriebselement abremst.

*Fig.1*

Ueberholsperre für eine Antriebsvorrichtung
und Verwendung der Ueberholsperre in einem
Fahrzeug mit Einzelradantrieb

------------------------------------------------

Die Erfindung bezieht sich auf eine Ueberholsperre für eine Antriebsvorrichtung bestehend aus einem auf einer starren Achse nebeneinanderliegend angeordneten drehbaren Antriebs- und Abtriebselement mit feststehenden Mitnehmerelementen und eignet sich besonders zur Verwendung in einem Fahrzeug mit Einzelradantrieb.

Es sind verschiedene Gesperre und Freilaufvorrichtungen bekannt, die nur in einer Drehrichtung laufen und in der anderen Drehrichtung blockieren.

Die Erfindung, wie sie in den Ansprüchen gekennzeichnet ist, löst die Aufgabe eine Ueberholsperre für eine Antriebsvorrichtung zu schaffen, die in beiden Drehrichtungen wirksam ist und ein Ueberholen des Antriebselementes durch das Antriebselement, insbesondere bei einem Fahrzeug mit Einzelradantrieb, durch Bremsung wirksam unterbunden werden kann.

Die Vorteile der Erfindung sind darin zu sehen, dass durch Bremsung des Abtriebselementes eine Blockierung des Antriebsrades erfolgt, wobei das Drehmoment des Antriebsrades von der starren Achse aufgenommen wird, so dass lediglich die zur Auslösung des Gesperres erforderliche Kraft aufgebracht werden muss. Ein Fahrzeug mit Einzelradantrieb kann somit einfach und wirkungsvoll gesteuert werden.

Im folgenden werden Ausführungsbeispiele des Erfindungsgegenstandes anhand der beiliegenden Zeichnungen erläutert. Es zeigen:

Fig. 1 einen Schnitt durch ein Ausführungsbeispiel einer Mitnehmereinrichtung,

Fig. 2 die Mitnehmereinrichtung von Fig. 1 in auseinandergezogener Darstellung,

Fig. 3 einen Schnitt entlang der Linie III-III in Fig. 1, und

Fig. 4 einen Schnitt durch ein anderes Ausführungsbeispiel der Mitnehmereinrichtung.

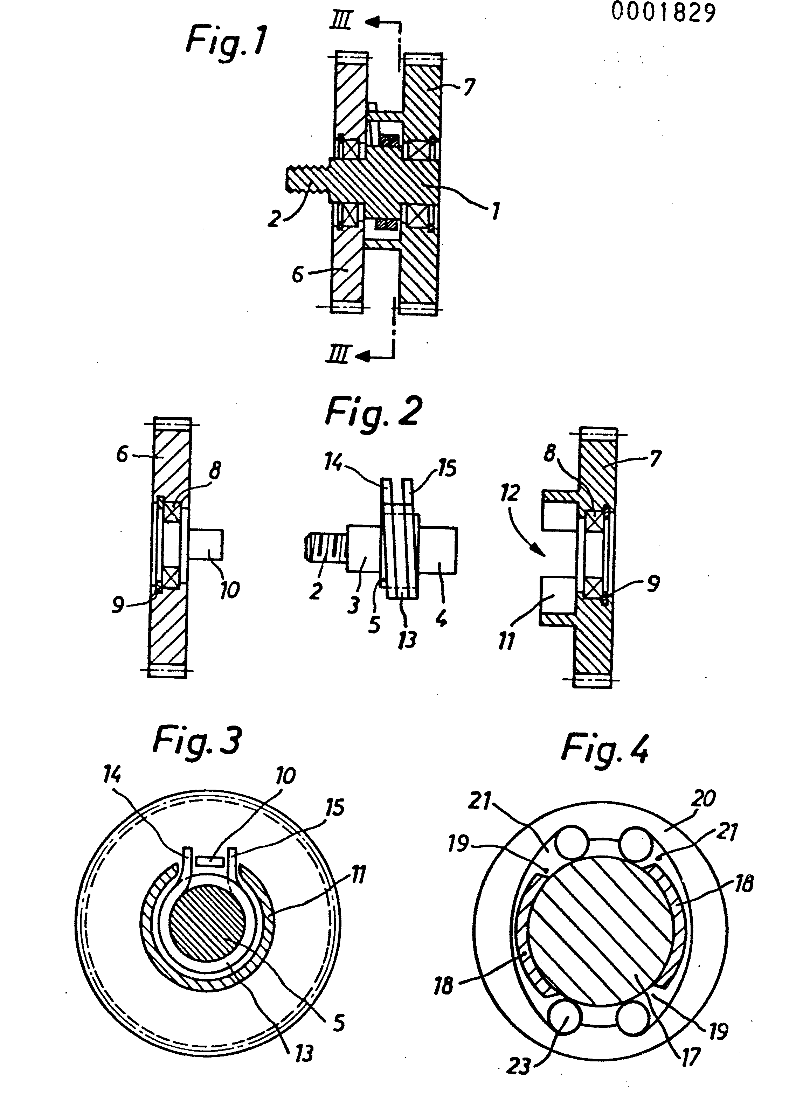

Die Fig. 1 bis 3 zeigen ein Ausführungsbeispiel einer Ueberholsperre für eine Antriebsvorrichtung. Die Vorrichtung weist eine Achse 1 mit einem Gewindezapfen 2 auf, mit dem die Achse an einer nicht dargestellten Vorrichtung befestigt werden kann. Die Achse 1 hat zwei Abschnitte 3,4 mit gleichem Durchmesser und gleicher Länge, zwischen denen ein Mittelabschnitt 5 mit grösserem Durchmesser vorgesehen ist. Auf den Abschnitten 3 und 4 sind ein Antriebsrad 6 und ein Abtriebsrad 7 aufgesetzt. Die beiden Räder 6 und 7 sind als Zahnräder ausgebildet und mittels einem Kugellager 8 gelagert. Die Kugellager 8 sind mittels Seeger-Ringe 9 in den Zahnrädern 6,7 gehalten. Das Antriebsrad 6 weist an einer Seite einen rechtwinklig abstehenden Abschnitt 10 auf, der in einem bestimmten Abstand vom Radmittelpunkt vorgesehen ist und das Mitnehmerelement des Antriebsrades 6 bildet. Am Abtriebsrad 7 ist an einer Seite ein ringförmiger Abschnitt 11 vorgesehen, der koaxial zur Radachse ausgebildet ist und das Mitnehmerelement des Abtriebsrades 7 bildet. Der Innenradius des ringförmigen Abschnittes 11 ist gleich gross wie der Abstand des abstehenden Abschnittes 10 am Antriebsrad 6. In den ringförmigen Abschnitt 1 ist eine Ausnehmung 12 vorgesehen. Ferner ist eine Schlingfeder 13 vorgesehen, deren Enden als von der Wicklung abstehende Schenkel 14,15 ausgebildet sind. Die Schenkel 14,15 sind in einem Abstand parallel zueinanderstehend ausgebildet.

Wie Fig. 1 zeigt, ist die Schlingfeder 13 auf dem Mittelabschnitt 5 der Achse 1 angeordnet. Der Antriebsrad 6 ist auf dem einen Abschnitt 3 der Achse 1 so angeordnet, dass das Mitnehmerelement 10 des Antriebsrades 6 zwischen die Stege 14,15 der Schlingfeder 13 eingreift. Das Abtriebsrad 7 ist auf dem anderen Abschnitt 4 der Achse 1 so angeordnet, dass das Mitnehmerelement 11 des Abtriebsrades die Stege 14,15 der Schlingfeder 13 übergreift.

Die Räder 6,7 werden mittels Seeger-Ringe 16 auf der

0001829

Achse 1 gehalten.

Nachfolgend wird die Funktion der Vorrichtung beschrieben. Durch das am Antriebsrad 6 vorgesehene Mitnehmerelement 10 werden die Schenkel 14,15 der Schlingfeder 13 beim Auftreten eines Drehmomentes auf der Antriebsseite geöffnet und jeweils gegen die Kanten des Ausschnittes 12 im Mitnehmerelement 11 des Abtriebsrades 7 gedrückt und auf diese Weise in die eine oder andere Drehrichtung mitgenommen. Wird die Drehzahl des Antriebsrades 6 brüsk geändert, so wird das Mitnehmerelement 11 des Abtriebsrades 7 mit der entsprechenden Kante des Ausschnittes 12 von aussen an den entsprechenden Schenkel der Feder 13 gedrückt. Dadurch wird der Innendurchmesser der Schlingfeder 13 verringert, umschliesst somit den Mittelabschnitt 5 der Achse 1 und bremst dadurch die Schwungmasse des Antriebes ab.

Das vorstehende Ausführungsbeispiel des Erfindungsgegenstandes ist anhand eines Zahnradgetriebes erläutert. Es wird darauf hingewiesen, dass diese Ausführung auch bei Riemenantrieben verwendet werden kann.

Die Fig. 4 zeigt ein anderes Ausführungsbeispiel des Erfindungsgegenstandes. Dabei ist auf einer feststehenden Achse 17 ein nicht dargestelltes Antriebsorgan angeordnet, dessen Mitnehmerelement 18 mit seiner zylinderförmigen Innenfläche auf der Achse 17 sitzt. Im Mitnehmerelement 18 sind zwei Ausschnitte 19 vorgesehen, die einander gegenüberliegend ausgebildet und deren Ränder als nach aussen leicht abgeschrägte Flächen ausgebildet sind, so dass jeweils zwei Abschnitte der Mantelfläche der Achse 17 freiligen.

Ueber dem Mitnehmerelement 18 des Antriebsorganes ist ein ringförmiger Teil 20 angeordnet, der das Mitnehmerelement eines nicht dargestellten Abtriebsorganes ist. Das Mitnehmerelement 20 weist an der Innenseite zwei jeweils zwei Umlaufanschläge und eine Sperrflanke bildende Ausnehmungen 21 auf, die sich parallel zur Achse 17 erstrecken. Die Ausnehmungen 21 sind spiegelsymmetrisch ausgebildet. In den von dem freiliegenden Abschnitt der Mantelfläche der Achse 17, den Rändern des Mitnehmerelementes 18 und den Ausnehmungen 21 begrenzten Räumen ist jeweils eine Rolle 23 anliegend an den entsprechenden Umlaufanschlag frei drehbar eingelegt und durch geeignete Mittel, die nicht dargestellt sind, gegen seitliches Verschieben, d.h. in der Längsrichtung der Achse 17 gesichert.

Die Ueberholsperre funktioniert wie folgt. Durch die Drehung des Antriebsorganes wird das Mitnehmerelement 18 mit der entsprechenden abgeschrägten Fläche mit den entsprechenden Rollen 23 in Anlage gebracht. Dadurch werden die Rollen 23 leicht von der Mantelfläche der Achse 17 abgehoben und gegen den entsprechenden Umlaufanschlag in den Ausnehmungen 21 gedrückt. Es entsteht eine kraftschlüssige Verbindung zwischen den zwei Mitnehmerelementen 18,20 und das Abtriebsorgan dreht mit der gleichen Drehzahl wie das Antriebsorgan.

Wird nun die Drehzahl des Antriebsorgans verringert, so werden die Rollen 23 zwangsweise gegen die entsprechenden Sperrflanken gedrückt und das Abtriebsorgan wird abgebremst.

Beim vorstehend beschriebenen Ausführunsbeispiel werden Rollen 23 als Mitnehmerglieder verwendet. Es besteht auch die Möglichkeit Kugeln als Mitnehmerglieder zu verwenden, wobei die Ueberholsperre innerhalb der Nabe des Abtriebsorgans angeordnet werden kann.

Die vorstehend beschriebenen Ausführungsbeispiele der Erfindung können zur Lenkung von Fahrzeugen mit Einzelradantrieb verwendet werden. Dazu wird jedem Radantrieb eine Ueberholsperre zugeordnet, die zwischen dem Antriebsteil und dem Rad des Fahrzeuges angeordnet wird. Durch eine Regulierung der Drehzahl des Antriebsteiles kann somit eine Lenkung des Fahrzeuges erfolgen. Der Erfindungsgegenstand eignet sich besonders für einen elektrisch angetriebenen Invaliden-Rollstuhl.

- 1 -

P a t e n t a n s p r ü c h e
--------------------------------

1. Ueberholsperre für eine Antriebsvorrichtung bestehend aus einem auf einer starren Achse nebeneinanderliegend angeordneten drehbaren Antriebs- und Abtriebselement mit feststehenden Mitnehmerelementen, dadurch gekennzeichnet, dass eine Schlingfeder (13), deren Enden als abstehende Schenkel (14,15) ausgebildet sind, zwischen dem Antriebs- und Abtriebselement (6,7) auf der Achse (1) angeordnet ist, wobei das Mitnehmerelement (10) das Antriebselement (6) zwischen die Schenkel (14,15) der Schlingfeder (13) eingreift und das Mitnehmerelement (11) das Abtriebselement (7), die Schenkel (14, 15) der Schlingfeder (13) übergreift, so dass die Schlingfeder (13) bei gleichlaufendem Antriebs- und Abtriebselement (6,7) ungehindert mitläuft und bei ungleichlaufendem Antriebs- und Abtriebselement (6,7) zwangsweise gegen die starre Achse (1) gezogen wird, um das Abtriebselement (7) abzubremsen.

2. Ueberholsperre nach Anspruch 1, dadurch gekennzeichnet, dass die Schlingfeder (13) mehrere aneinanderliegende Wicklungen aufweist, und dass die Schenkel (14,15) der Schlingfeder parallel zueinander von der Wicklung abstehen.

3. Ueberholsperre für eine Antriebsvorrichtung bestehend aus einem auf einer starren Achse nebeneinanderliegend angeordneten drehbaren Antriebs- und Abtriebselement mit feststehenden Mitnehmerelementen und beweglichen Mitnehmergliedern, dadurch gekennzeichnet, dass das Mitnehmerelement (18) des Antriebselementes mit seiner zylinderförmigen Innenfläche auf der Achse (17) aufsitzt und mindestens einen Ausschnitt (21) mit abgeschrägten Kanten aufweist, so dass ein Oberflächenabschnitt der Achse (17) freiliegt, dass das Mitnehmerelement (20) des Antriebselementes über dem Mitnehmerelement (18) des Antriebselementes auf der Achse (17) angeordnet ist und an der Innenfläche zwei mindestens einen Umlaufanschlag und eine Sperrflanke bildende Ausnehmungen (21) aufweist, und dass mindestens zwei Mitnehmerglieder (23) vorgesehen sind, die in den zwischen dem Oberflächenabschnitt der Achse und den Ausnehmungen gebildeten Raum eingelegt sind, wobei die Mitnehmerglieder (23) bei gleichlaufendem Antriebs- und Abtriebselement gegen den Umlaufanschlag gedrückt werden und ungehindert mitlaufen und bei ungleichlaufendem Antriebs- und Abtriebselement zwangsweise gegen die Sperrkante gedrückt werden, um das Antriebselement abzubremsen.

4. Ueberholsperre nach Anspruch 3, dadurch gekennzeichnet, dass das Mitnehmerelement (18) des Antriebselementes (6) zwei sich gegenüberliegende Ausschnitte (19) aufweist, dass die Ausnehmungen (21) so ausgebildet sind, dass sie an ihren Rändern jeweils einen Umlaufanschlag bilden und dass vier Mitnehmerglieder (23) vorgesehen sind.

5. Ueberholsperre nach Anspruch 3 oder 4, dadurch gekennzeichnet, dass die Mitnehmerglieder (23) Kugeln sind.

6. Ueberholsperre nach Anspruch 3 oder 4, dadurch gekennzeichnet, dass die Mitnehmerglieder (23) Rollen sind.

7. Verwendung der Ueberholsperre nach Anspruch 1 oder 3 in einem Fahrzeug mit Einzelradantrieb, dadurch gekennzeichnet, dass jeder Radantrieb mit einer Ueberholsperre versehen ist, um mittels einer Drehzahlregulierung des Antriebsorgans das Fahrzeug zu lenken.

0001829

**Fig.1**

**Fig. 2**

**Fig. 3**

**Fig. 4**

Europäisches
Patentamt

**EUROPÄISCHER RECHERCHENBERICHT**

Nummer der Anmeldung

EP 78 10 1276

| | EINSCHLÄGIGE DOKUMENTE | | KLASSIFIKATION DER ANMELDUNG (Int.Cl.⁷) |
|---|---|---|---|
| Kategorie | Kennzeichnung des Dokuments mit Angabe, soweit erforderlich, der maßgeblichen Teile | betrifft Anspruch | F 16 B 1/04// A 61 G 5/04 |
| X | <u>FR - A - 1 275 142</u> (VIR LOUVET)  * Seite 1; Figuren * | 1,2 | |
| X | <u>US - A - 2 509 541</u> (SUSKA)  * Spalte 1, Zeilen 33-55; Spalte 2, Zeilen 1-49; Figuren * | 3,4,6 | |
| X | <u>US - A - 3 319 747</u> (LAUPER)  * Spalte 1, Zeilen 9-17,58-71; Spalte 2, Zeilen 1-71; Spalte 3, Zeilen 1-14; Figuren * | 3,4,6 | **RECHERCHIERTE SACHGEBIETE (Int. Cl.³)**  F 16 B 1/04 A 61 G 5/04 F 16 D 49/02  49/04  59/00 |
| X | <u>FR - A - 2 239 622</u> (MICROTECNICA)  * Seite 4, Zeilen 10-37; Figuren * | 1,2 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-02-1979 | FLORES |

EPA form 1503.1 06.78